# EUROPÄISCHE PATENTANMELDUNG

(11) **EP 0 803 186 A2**
(43) Veröffentlichungstag der Anmeldung: **29.10.1997**
(21) Anmeldenummer: 97101313.1
(22) Anmeldetag: 29.01.1997
(51) Int. Cl.: A01G 3/037

(54) **Werkzeug, insbesondere Astschere**

(30) Priorität: 27.04.1996 DE 19616948
(71) Anmelder: J. WAGNER GMBH, 88048 Friedrichshafen (DE)
(72) Erfinder: Jeltsch, Thomas, Dipl.-Ing., 88677 Markdorf (DE)
(74) Vertreter: Engelhardt, Guido, Dipl.-Ing.

(57) **Zusammenfassung**

Bei einer Astschere (1) mit zwei gegeneinander verstellbaren Klinken (11, 12), von denen eine Klinke (11) starr mit einem Gehäuse (2) verbunden und die andere Klinke (12) durch einen Elektromotor (5) über eine Gewindespindel (8), einer auf dieser angeordneten Gewindemutter (21) und einem mit dieser verbundenen Gestänge verstellbar ist, weist die Klinke (11) ein in das Gehäuse (2) hineinragendes Ansatzstück (13) auf, und die Gewindespindel (8) ist mittels eines Wälzlagers (31) drehbar gelagert, das auf der Gewindespindel (8) fixiert und in einer in das Ansatzstück (13) eingearbeiteten Ausnehmung (17) axial abgestützt ist.

Durch diese Ausgestaltung wird erreicht, daß die bei einem Schneidvorgang auftretenden Schnittkräfte von den beteiligten Bauteilen aufgenommen werden, so daß das Gehäuse (2) durch diese Kräfte nicht beansprucht wird und entsprechend einfach und ergonomisch gestaltet werden kann. Die beim Schließen der verstellbaren Klinke (12) auf die Gewindespindel (8) übertragenen Zugkräfte werden nämlich über das Wälzlager (31) in dem Ansatzstück (13) abgestützt, entgegengesetzt gerichtet wirkt auf dieses des weiteren im Bereich der Lagerstelle der verstellbaren Klinke (12) eine Kraft ein, so daß sich diese Kräfte aufheben und ein geschlossener Kraftfluß gegeben ist.

## Beschreibung

Die Erfindung bezieht sich auf ein Werkzeug, insbesondere Astschere oder dgl., mit zwei gegeneinander verstellbaren Klinken, von denen die eine Klinke starr mit einem Gehäuse verbunden und die andere Klinke durch einen in dem Gehäuse angeordneten Elektromotor über eine von diesem verdrehbare Gewindespindel, einer auf dieser angeordneten, drehfest abgestützten Gewindemutter und einem mit dieser verbundenen Gestänge verstellbar ist.

Durch die EP 0 291 431-A1 ist eine Astschere dieser Art bekannt. Die feststehende Klinke ist bei diesem Werkzeug an dem Gehäuse angeschraubt, das dazu mit einem angeformten nach außen auskragenden Ansatz versehen ist. Außerdem ist die durch den Motor angetriebene Gewindespindel mittels zweier Nadellager unmittelbar an einer Zwischenwand des Gehäuses abgestützt, so daß sowohl die von der feststehenden Klinke aufzunehmenden Kräfte als auch die beim Schneidvorgang auftretenden auf die verschwenkbare Klinke ausgeübten Kräfte von dem Gehäuse aufzunehmen sind.

Abgesehen davon, daß das Gehäuse somit entsprechend groß zu bemessen ist, ist dieses auch aus einem hochwertigen Werkstoff mit hoher Festigkeit herzustellen, um Beschädigungen, insbesondere Brüche, durch Überbeanspruchungen infolge hoher Schnittkräfte zu vermeiden. Die bekannte Astschere weist demnach ein hohes Eigengewicht auf und ist schwierig in der Handhabung, auch ist der Investitionsaufwand erheblich.

Aufgabe der Erfindung ist es daher, ein Werkzeug, insbesondere eine Astschere der vorgenannten Gattung zu schaffen, das einfach in seiner konstruktiven Ausgestaltung und demnach wirtschaftlich herzustellen ist, vor allem aber soll errreicht werden, daß von dem Gehäuse bei einem Schneidvorgang nur sehr geringe Kräfte aufzunehmen sind, so daß dieses einfach und handlich gestaltet werden kann. Der Bauaufwand, mit dem dies zu erreichen ist, soll gering gehalten werden, dennoch soll gewährleistet sein, daß stets eine zufriedenstellende Funktionsweise bei hoher Betriebssicherheit und einfacher Handhabung gegeben sind.

Gemäß der Erfindung wird dies bei einem Werkzeug, insbesondere einer Astschere, der vorgenannten Gattung dadurch erreicht, daß die mit dem Gehäuse verbundene Klinke ein sich in Richtung der Gewindespindel erstreckenden in das Gehäuse hineinragendes Ansatzstück aufweist und daß die Gewindespindel in dem dem Antriebsmotor abgewandten Endbereich in einem Wälzlager drehbar gelagert ist, das in Achsrichtung der Gewindespindel fixiert auf dieser angeordnet und in einer in das Ansatzstück eingearbeiteten Ausnehmung vorzugsweise beidseitig axial abgestützt ist.

Zweckmäßig ist es hier, die Spindelmutter mittels zweier oder mehrerer mittig nach außen abstehender Zapfen oder dgl. drehfest in in dem Gehäuse vorgesehene Nuten axial verstellbar zu führen. Des weiteren ist es angebracht, das die Gewindespindel mit der verstellbaren Klinke verbindende Gestänge durch zwei Hebel zu bilden, die seitlich an dem Wälzlager und dem Ansatzstück der ortsfesten Klinke vorbeigeführt und an der Gewindemutter und der verstellbaren Klinke angelenkt sind, wobei zur Anlenkung der Hebel an der Spindelmutter diese auf der Außenmantelfläche mit einem oder mehreren vorzugsweise ballig ausgebildeten Nocken versehen sein sollte, die in in die Hebel, vorzugsweise in Laschen, eingearbeitet Ausnehmungen eingreifen.

Wird ein Werkzeug, insbesondere eine Astschere, gemäß der Erfindung ausgebildet, so ist es bei einfacher konstruktiver Ausgestaltung möglich, die bei einem Schneidvorgang auftretenden Schnittkräfte Von den beteiligten Bauteilen aufzunehmen, so daß das Gehäuse durch diese Kräfte nicht beansprucht wird und somit entsprechend einfach und ergonomisch gestaltet werden kann. Die beim Schließen der verstellbaren Klinge durch die Gewindemutter auf die Gewindespindel übertragenen Zugkräfte werden nämlich über das Wälzlager in dem Ansatzstück abgestützt, in gleicher Weise, aber entgegengesetzt gerichtet, wirkt auf dieses im Bereich der Lagerstelle der verstellbaren Klinke eine Kraft ein. Diese Kräfte heben sich somit in den an einem Schneidvorgang unmittelbar beteiligten Bauteilen auf, so daß ein geschlossener Kraftfluß gegeben und das Gehäuse nahezu frei von Kräften ist. Eine sichere Funktonsweise über einen langen Zeitraum ist dadurch, zumal auch die Handhabung des vorschlagsgemäß ausgebildeten Werkzeuges einfach ist, gewährleistet.

In der Zeichnung ist ein Ausführungsbeispiel der gemäß der Erfindung ausgebildeten Astschere dargestellt, das nachfolgend im einzelnen erläutert ist. Hierbei zeigt:
- Figur 1: die Astschere, teilweise in einem Axialschnitt und teilweise in Ansicht,
- Figur 2: einen Schnitt nach der Linie II - II der Figur 1 und
- Figur 3: einen Schnitt nach der Linie III - III der Figur 1.

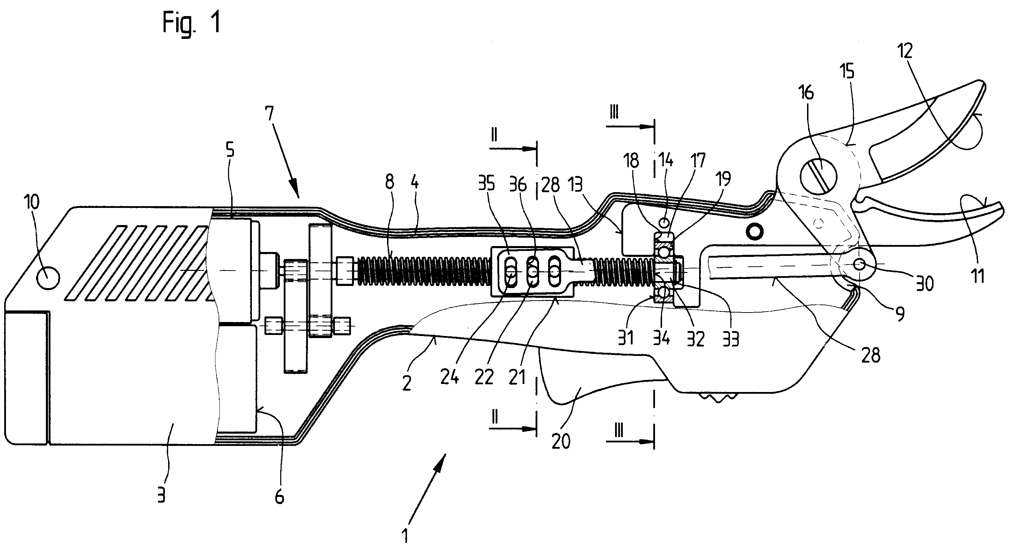

Die in Figur 1 dargestellte und mit 1 bezeichnete Astschere besteht im wesentlichen aus zwei aus einem zweischaligen Gehäuse 2 herausragende gegeneinander verstellbare Klingen 11 und 12, von denen die Klinke 11 starr mit dem Gehäuse 2 verbunden und die Klinke 12 mittels eines Elektromotors 5 verschwenkbar ist. Der von einer Batterie 6 gespeiste Elektromotor 5 ist dazu über ein Reduktionsgetriebe 7, eine Gewindespindel 8 sowie einer durch diese verschiebbaren Spindelmutter 21 und einem aus Heben 28 und 29 gebildeten Gestänge 28, 29 trieblich mit der Klinke 12 verbunden.

Das Gehäuse 2 besteht aus zwei Kunststoffschalen 3 und 4, die auf der dem Elektromotor 5 gegenüberliegenden Seite jeweils mit einer Freisparung 9 versehen sind, durch die die Klinken 11 und 12 herausragen. Mittels Schrauben 10 sind die Halbschalen 3 und 4 fest miteinander verbunden.

Um die bei einem Schneidvorgang auftretenden Schnittkräfte innerhalb der daran beteiligten Bauteile abstützen zu können, so daß diese Kräfte nicht auf das Gehäuse 2 übertragen werden, ist die Klinke 11 mit einem in Richtung der Gewindespindel 8 abstehenden Ansatzstück 13 versehen, das mittels Bohrungen 14 durchgreifender Schrauben an der Halbschale 4 befestigt ist. Außerdem weist das Ansatzstück 13 ein Lagerauge 15 auf, in dem mittels eines Bolzens 16 die Klinke 12 verschwenkbar gehalten ist. Im Bereich der Gewindespindel 8 ist in das Ansatzstück 13 des weiteren eine Ausnehmung 17 eingearbeitet, und auf der Gewindespindel 8 ist ein Wälzlager 31 axial unverschiebbar angeordnet, das in der Ausnehmung 17 in Achsrichtung abgestützt ist. Die Gewindespindel 8 ist dazu mit einem abgesetzten Bolzen 32 versehen, auf den das Wälzlager 31 aufgesetzt ist. Mittels eines in dem Bolzen 32 gehaltenen Sprengringes 33 einerseits und einer an der Gewindespindel 8 angearbeiteten Anschlagfläche 34 ist das Wälzlager 8 auf dieser fixiert, außerdem sind die einander zugekehrten Flächen der Ausnehmung 17 als Anlageflächen 18 und 19 für das Wälzlager 31 ausgebildet. Auf die Gewindespindel 8 einwirkende Kräfte können somit über das Wälzlager 31 auf das Ansatzstück 13 übertragen werden.

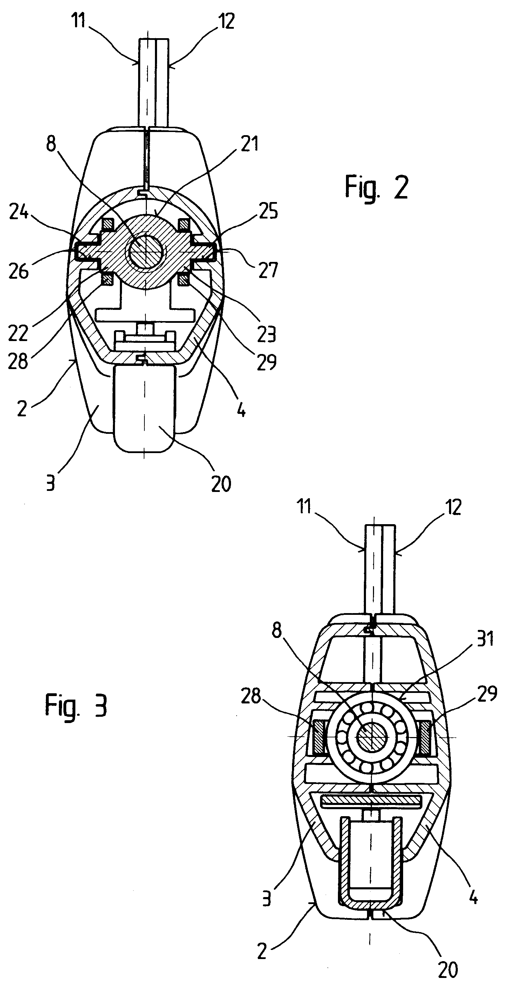

Die Gewindemutter 21 ist, wie dies insbesondere der Figur 2 zu entnehmen ist, mittels zweier seitlich abstehender Bolzen 24 und 25 in in die Halbschalen 3 und 4 des Gehäuses 2 eingeformter Nuten 26 und 27 verdrehfest aber axial verschiebbar geführt. Die Bolzen 24 und 25 stehen bei dem gezeigten Ausführungsbeispiel von Nocken 22 bzw. 23 ab, an denen die Hebel 28 und 29 mit einem Ende angelenkt sind, die dazu jeweils als mit Ausnehmungen 36 zur Aufnahme der Nocken 22 bzw. 23 versehene Laschen 35 ausgebildet sind. Mit dem anderen Ende sind die Hebel 28 und 29 mittels eines Gelenkbolzens 30 mit der verstellbaren Klinke 12 trieblich verbunden.

Wird mit Hilfe eines Betätigungshebels 20 der Elektromotor 5 eingeschaltet und wird die Gewindespindel 8 durch diesen derart verdreht, daß die Gewindemutter 21 nach links verstellt wird, so wird über die mit dieser trieblich verbundenen Hebel 28 und 29 die Klinke 12 um den Bolzen 16 verschwenkt, so daß ein zwischen den Klinken 11 und 12 befindlicher Ast abgeschert wird. Durch eine Drehrichtungsumkehrung des Elektromotors 5 werden die Klinken 11 und 12 wiederum in die dargestellte Betriebsstellung zurückgeführt.

Wird mit der Astschere 1 ein Teil durchtrennt, so ist dazu die Gewindemutter 21, um die Klinke 12 in Richtung der feststehenden Klinke 11 zu bewegen, durch die von dem Elektromotor 5 angetriebene Gewindespindel 8 nach links verschoben. Die dabei auftretende Zugkraft wird über das Wälzlager 31 an der Anlagefläche 19 abgestützt. Gleichzeitig wirkt auf das Ansatzstück 13 aber auch eine entgegengerichtete Kraft ein, die durch das Verschwenken der Klinke 12 ausgelöst und über den Bolzen 16 auf das Ansatzstück 13 übertragen wird. Und da diese Kräfte nahezu gleich groß, aber entgegengesetzt zueinander gerichtet sind, ist ein geschlossener Kraftfluß gegeben, so daß das Gehäuse 2 nahezu frei von durch einen Schnittvorgang bedingte Beanspruchungen ist.

## Patentansprüche

1. Werkzeug, insbesondere Astschere (1) oder dgl., mit zwei gegeneinander verstellbaren Klinken (11, 12), von denen die eine Klinke (11) starr mit einem Gehäuse (2) verbunden und die andere Klinke (12) durch einen in dem Gehäuse (2) angeordneten Elektromotor (5) über eine von diesem verdrehbare Gewindespindel (8), einer auf dieser angeordneten drehfest abgestützten Gewindemutter (21) und einem mit dieser verbundenen Gestänge verstellbar ist,
**dadurch gekennzeichnet,**
daß die mit dem Gehäuse (2) verbundene Klinke (11) ein sich in Richtung der Gewindespindel (8) erstreckendes in das Gehäuse (2) hineinragendes Ansatzstück (13) aufweist und daß die Gewindespindel (8) in dem dem Antriebsmotor (5) abgewandten Endbereich in einem Wälzlager (31) drehbar gelagert ist, das in Achsrichtung der Gewindespindel (8) fixiert auf dieser angeordnet und in einer in das Ansatzstück (13) eingearbeiteten Ausnehmung (17) vorzugsweise beidseitig axial abgestützt ist.

2. Werkzeug nach Anspruch 1,
**dadurch gekennzeichnet,**
daß die Spindelmutter (21) mittels zweier oder mehrerer mittig nach außen abstehender Zapfen (24, 25) oder dgl. drehfest in in dem Gehäuse (2) vorgesehene Nuten (26, 27) axial verstellbar geführt ist.

3. Werkzeug nach Anspruch 1 oder 2,
**dadurch gekennzeichnet,**
daß das die Gewindespindel (8) mit der verstellbaren Klinke (12) verbindende Gestänge durch zwei Hebel (28, 29) gebildet ist, die seitlich an dem Wälzlager (31) und dem Ansatzstück (13) der ortsfesten Klinke (11) vorbeigeführt und an der Gewindemutter (21) und der verstellbaren Klinke (12) angelenkt sind.

4. Werkzeug nach Anspruch 3,
**dadurch gekennzeichnet,**
daß zur Anlenkung der Hebel (28, 29) an der Spindelmutter (21) diese auf der Außenmantelfläche mit einem oder mehreren vorzugsweise ballig ausgebildeten Nocken (22, 23) versehen ist, die in in die Hebel (28, 29), vorzugsweise in Laschen (35), eingearbeitete Ausnehmungen (36) eingreifen.
